(19) Europäisches Patentamt / European Patent Office / Office européen des brevets

(11) **EP 3 275 756 B1**

(12) **EUROPEAN PATENT SPECIFICATION**

(45) Date of publication and mention
of the grant of the patent:
**31.07.2024 Bulletin 2024/31**

(21) Application number: **16772360.0**

(22) Date of filing: **18.03.2016**

(51) International Patent Classification (IPC):
*B60W 30/182* (2020.01)    *B60K 31/00* (2006.01)
*B60W 30/14* (2006.01)    *F16H 61/02* (2006.01)
*F16H 63/46* (2006.01)    *F16H 63/50* (2006.01)
*B60W 30/18* (2012.01)

(52) Cooperative Patent Classification (CPC):
**B60W 30/14; B60W 30/143; B60W 30/18163;
B60W 30/182;** B60K 31/00; B60W 2030/1809;
B60W 2520/10; B60W 2540/10; B60W 2540/12;
B60W 2540/18; B60W 2540/20; B60W 2540/215;
B60W 2552/15; B60W 2552/20; B60W 2554/80;

(Cont.)

(86) International application number:
**PCT/JP2016/058631**

(87) International publication number:
**WO 2016/158477 (06.10.2016 Gazette 2016/40)**

(54) **TRAVEL CONTROL DEVICE AND TRAVEL CONTROL METHOD**

BEWEGUNGSSTEUERUNGSVORRICHTUNG UND BEWEGUNGSSTEUERUNGSVERFAHREN

DISPOSITIF DE COMMANDE DE DÉPLACEMENT ET PROCÉDÉ DE COMMANDE DE DÉPLACEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.03.2015 JP 2015065565**

(43) Date of publication of application:
**31.01.2018 Bulletin 2018/05**

(73) Proprietor: **Isuzu Motors Limited**
**Tokyo 140-8722 (JP)**

(72) Inventors:
• **YAMAKADO, Ryuu**
**Fujisawa-shi**
**Kanagawa 252-0881 (JP)**
• **ISHIGURO, Shinichi**
**Fujisawa-shi**
**Kanagawa 252-0881 (JP)**

(74) Representative: **Dennemeyer & Associates S.A.**
**Landaubogen 1-3**
**81373 München (DE)**

(56) References cited:
DE-A1- 102013 010 148    DE-A1- 102013 225 431
JP-A- 2002 227 885    JP-A- 2004 138 143
JP-A- 2008 162 553    JP-A- 2012 131 273
US-A1- 2011 196 592    US-A1- 2012 197 500

(52) Cooperative Patent Classification (CPC): (Cont.)
B60W 2555/20; F16H 61/02; F16H 63/46;
F16H 63/50; Y02T 10/60

**Description**

Technical Field

The present invention relates to a travel control device and a travel controlling method for controlling travel of a vehicle.

Background Art

As a conventional technique relating to travel of a vehicle, a technique for reducing the burden of the driver while improving fuel economy is known (see, for example, PTL 1).

In the technique disclosed in PTL 1 (hereinafter referred to as "conventional technique") the vehicle is controlled to travel in accordance with a travel schedule including drive travel and coasting. Here, the drive travel is normal travel of a vehicle with the wheels driven with a power generation source such as an engine. In the coasting, with operations such as disengagement of the clutch, a vehicle travels with the inertia force without driving the wheels.

By employing the coasting, the fuel economy of a vehicle is improved. Accordingly, the conventional technique can allow the driver to perform travel with good fuel economy and fewer operations. Further, PTL 2 and PTL 3 disclose a travel control device that has an automatic travel control section that controls a vehicle to travel in accordance with a travel schedule including drive travel and coasting, a passing detection section that detects a start of a passing operation in which the vehicle passes another vehicle, and a coasting prohibition processing section that prohibits the automatic travel control section from starting the coasting on a condition that the passing operation is started.

Citation List

Patent Literature

PTL 1
Japanese Patent Application Laid-Open No. 2012-131273
PTL2
DE 10 2013 010148 A1
PTL 3
DE 10 2013 225431 A1

Summary of Invention

Technical Problem

In the conventional technique, however, the driver may feel unnatural in an operation of passing another vehicle (hereinafter referred to as "passing operation").

The reason for this is as follows. In a passing operation performed by the driver himself or herself, the driver is a psychologically biased to finish the travelling side-by-side with another vehicle as soon as possible, and normally the driver does not perform the deceleration operation. At the time of switching from drive travel to coasting in automatic travel, however, the vehicle speed is gradually reduced for a moment. Such a deceleration is inconsistent with the psychological bias of the driver, and the driver may feel unnatural.

An object of the present invention is to provide a travel control device and a travel controlling method which can improve the fuel economy of a vehicle and reduce the burden of the driver while reducing the unnatural feeling of the driver.

Solution to Problem

The object solved by the features of the independent claims. A travel control device of the present invention includes: an automatic travel control section that controls a vehicle to travel in accordance with a travel schedule including drive travel and coasting; a passing detection section that detects a start of a passing operation in which the vehicle passes another vehicle; and a coasting prohibition processing section that prohibits the automatic travel control section from starting the coasting on a condition that the passing operation is started. The coasting prohibition processing section causes the automatic travel control section to continue the coasting when the passing operation is started while the vehicle is coasting.

A travel controlling method of the present invention includes: controlling a vehicle to travel in accordance with a travel schedule including drive travel and coasting; detecting a start of a passing operation in which the vehicle passes another vehicle; and prohibiting a start of the coasting on a condition that the passing operation is started. The controlling continues the coasting when the passing operation is started while the vehicle is coasting.

Advantageous Effects of Invention

With the present invention, it is possible to improve the fuel economy of a vehicle and reduce the burden of the driver while reducing the unnatural feeling of the driver.

Brief Description of Drawings

FIG. 1 is a block diagram illustrating an example of a configuration of a vehicle including a travel control device according to an embodiment of the present invention;
FIG. 2 is a block diagram illustrating an example of a configuration of the travel control device according to the present embodiment;
FIG. 3 illustrates examples of road grade information and a travel schedule of the present embodiment; and
FIG. 4 is a flowchart of an example operation of the travel control device according to the present embodiment.

Description of Embodiments

An embodiment of the present invention is described below in detail with reference to the accompanying drawings.

(Configuration of vehicle)

First, a configuration of a vehicle including a travel control device according to the embodiment of the present invention is described.

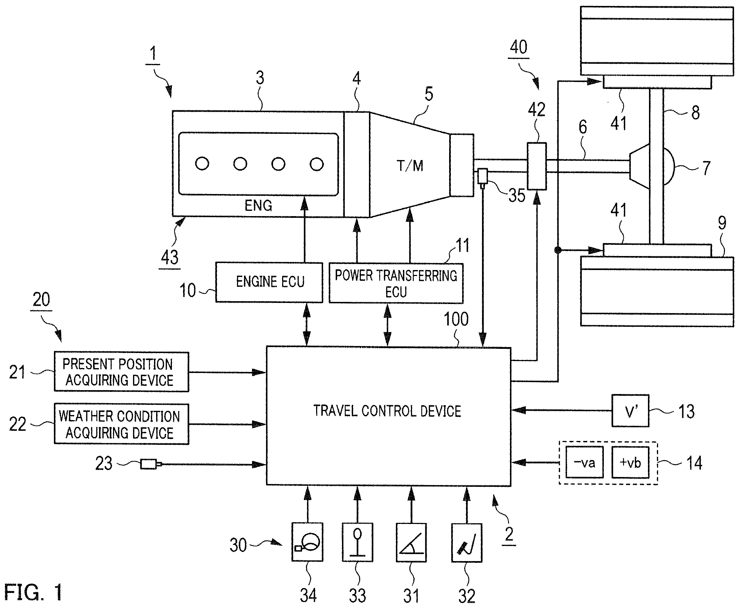

FIG. 1 is a block diagram illustrating an example of a configuration of the vehicle including the travel control device according to the present embodiment. It is to be noted that, here, portions related to the travel control device are illustrated and described.

For example, vehicle 1 illustrated in FIG. 1 is a large vehicle such as a truck in which an in-line six-cylinder diesel engine is mounted. It is to be noted that, in the following description, the coasting means coasting with the gear of transmission 5 in the neutral position.

As illustrated in FIG. 1, as a configuration of a driving system for travel of the vehicle, vehicle 1 includes engine 3, clutch 4, transmission 5, propeller shaft 6, differential gear 7, drive shaft 8, and wheel 9.

The power of engine 3 is transmitted to transmission 5 via clutch 4, and the power transmitted to transmission 5 is further transmitted to wheel 9 through propeller shaft 6, differential gear 7, and drive shaft 8. In this manner, the power of engine 3 is transmitted to wheel 9, and thus vehicle 1 travels.

In addition, as a configuration of a braking system for stopping the vehicle, vehicle 1 includes braking device 40. Braking device 40 includes foot brake 41 that applies a resistance force to wheel 9, retarder 42 that applies a resistance force to propeller shaft 6, and auxiliary brake 43 such as an exhaust brake that applies a load to the engine.

Further, as a configuration for controlling the automatic travel of vehicle 1, vehicle 1 includes automatic traveling device 2. Automatic traveling device 2 controls the output of engine 3, the engagement and disengagement of clutch 4, and the transmission of transmission 5 for automatic travel of vehicle 1. Automatic traveling device 2 includes a plurality of control devices.

To be more specific, automatic traveling device 2 includes engine ECU (engine control unit) 10, power transferring ECU (power transferring control unit) 11, target-vehicle speed setting device 13, increment/reduction value setting device 14, road information acquiring device 20, vehicle information acquiring device 30, and travel control device 100. It is to be noted that, engine ECU 10, power transferring ECU 11, and travel control device 100 are connected with one another with an in-vehicle network, and required data and control signals are exchangeable therebetween.

Engine ECU 10 controls the output of engine 3. Power transferring ECU 11 controls the engagement and disengagement of clutch 4, and the transmission operation of transmission 5.

Target-vehicle speed setting device 13 sets target-vehicle speed V' of automatic travel of vehicle 1 in travel control device 100. Increment/reduction value setting device 14 sets speed reduction value -va and speed increment value +vb of automatic travel of vehicle 1 in travel control device 100. The values V', -va, and +vb are parameters used for automatic travel of vehicle 1.

For example, target-vehicle speed setting device 13 and increment/reduction value setting device 14 include an information input interface such as a display with a touch panel disposed at the dashboard of the driver's seat (which is not illustrated), and receive settings of the above-mentioned parameters from the driver. Target-vehicle speed V', speed reduction value -va, and speed increment value +vb are referred to as "setting information" as necessary.

Road information acquiring device 20 acquires road information representing the state of the road and the present position of vehicle 1, and outputs the information to travel control device 100. For example, road information acquiring device 20 includes present position acquiring device 21 that is a receiver of a global positioning system (GPS), weather condition acquiring device 22 that acquires the weather condition during travel, and periphery sensor 23 that detects the distance from other vehicles around the travelling vehicle such as a vehicle travelling ahead and/or a vehicle travelling on a side, and the difference in vehicle speed from other vehicles around the travelling vehicle.

Desirably, in view of generation of the travel schedule described later, the road information includes road grade information representing the grade at each point of the road. For example, the road grade information is data in which, in association with the horizontal position (latitude longitude information and the like) of each point of the road, the altitude (road altitude) of the corresponding position is described.

Vehicle information acquiring device 30 acquires vehicle information representing the state of vehicle 1 and details of the operation of the driver, and outputs the information to travel control device 100. For example, vehicle information acquiring device 30 includes accelerator sensor 31 that detects the pressing amount of the accelerator pedal, brake switch 32 that detects the presence/absence of the pressing of the brake pedal, shift lever 33, turn-signal switch 34, and vehicle speed sensor 35 that detects vehicle speed V of vehicle 1.

On the basis of the setting information, the road information, and the vehicle information, travel control device 100 generates a travel schedule including drive travel and coasting. Then, travel control device 100 controls each section of vehicle 1 such that vehicle 1 travels in accordance with the generated travel schedule. It should be noted that, on the condition that a passing operation in which vehicle 1 passes another vehicle is started, travel control device 100 prohibits the start of the coasting.

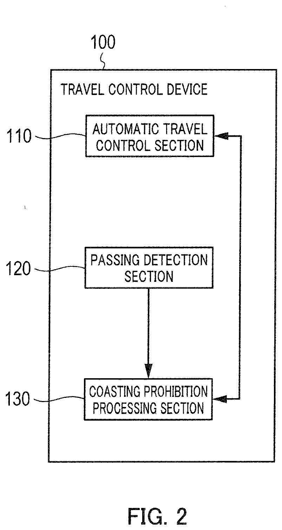

FIG. 2 is a block diagram illustrating an example of the configuration of travel control device 100.

In FIG. 2, travel control device 100 includes automatic travel control section 110, passing detection section 120, and coasting prohibition processing section 130.

Automatic travel control section 110 generates a travel schedule including drive travel and coasting, and controls vehicle 1 to travel in accordance with the generated travel schedule on the basis of the present position of vehicle 1.

For example, in the case of drive travel, automatic travel control section 110 controls the fuel injection amount of engine 3 through power transferring ECU 11 and the like so that the vehicle travels at the speed in accordance with the travel schedule. In addition, in the case of coasting, automatic travel control section 110 disengages clutch 4 through power transferring ECU 11. In addition, automatic travel control section 110 appropriately controls each section of braking device 40 to stop vehicle 1. Details of the travel schedule are described later.

It is to be noted that automatic travel control section 110 sequentially outputs to coasting prohibition processing section 130 travel mode information which represents whether coasting is performed.

When a passing operation of passing another vehicle is started, passing detection section 120 detects that fact, and outputs to coasting prohibition processing section 130 passing start information which represents the start of a passing operation. For example, on the basis of the vehicle information, passing detection section 120 monitors a predetermined operation performed by the driver. When the predetermined operation is performed, passing detection section 120 detects that fact as the start of a passing operation. Specific examples of the predetermined operation are described later.

In addition, when a predetermined completion condition corresponding to completion of a passing operation is satisfied, passing detection section 120 detects that fact, and outputs to coasting prohibition processing section 130 passing completion information which represents completion of a passing operation. Specific examples of the predetermined completion condition are described later.

Coasting prohibition processing section 130 prohibits automatic travel control section 110 from starting coasting on the condition that a passing operation is started. Then, when the predetermined completion condition corresponding to completion of a passing operation is satisfied, coasting prohibition processing section 130 releases the prohibition of the start of coasting. That is, coasting prohibition processing section 130 prohibits the start of coasting when passing start information is output, and releases the prohibition of the start of coasting when passing completion information is output.

It should be noted that coasting prohibition processing section 130 does not prohibit the coasting when automatic travel control section 110 is in a coasting state. Coasting prohibition processing section 130 determines whether vehicle 1 is in a drive travel state or in a coasting state on the basis of travel mode information output from automatic travel control section 110, for example.

Each of engine ECU 10, power transferring ECU 11, travel control device 100 has, for example, a central processing unit (CPU), a storage medium such as a read-only memory (ROM) having a control program stored therein, a working memory such as a random access memory (RAM), and a communication circuit, although these components are not illustrated. In this case, for example, the functions of the above-mentioned sections of travel control device 100 are achieved when the CPU executes the control program. It is to be noted that, engine ECU 10, power transferring ECU 11, and travel control device 100 may be integrally provided in part or in whole.

With travel control device 100, vehicle 1 having the above-mentioned configuration can prohibit the start of coasting when a passing operation is started while travelling in accordance with a travel schedule including drive travel and coasting.

Now details of the travel schedule used by automatic travel control section 110, specific examples of the predetermined operation representing a start of a passing operation, and specific examples of a predetermined completion condition corresponding to completion of a passing operation are described in this order.

(Travel schedule)

For example, automatic travel control section 110 sequentially generates at constant intervals a travel schedule of a predetermined time length from the present time, or, a travel schedule of a predetermined travel distance from the present position of vehicle 1. For example, such travel schedules are generated such that the travel schedule satisfies a travel condition that the average moving vehicle speed is target-vehicle speed V', and the maximum vehicle speed of the coasting is $V_{max}' = V'+vb$ or smaller, and, the minimum vehicle speed of the coasting is $V_{min}' = V'-va$ or greater.

For example, automatic travel control section 110 generates a travel schedule for actively performing coasting on a downslope road on the basis of the road information. Further, on the condition that the vehicle speed is acceptable minimum vehicle speed $V_{min}'$ or greater at the crest where the road changes from an upslope to a downslope, automatic travel control section 110 generates a travel schedule including switching from drive travel to coasting at a position before the crest.

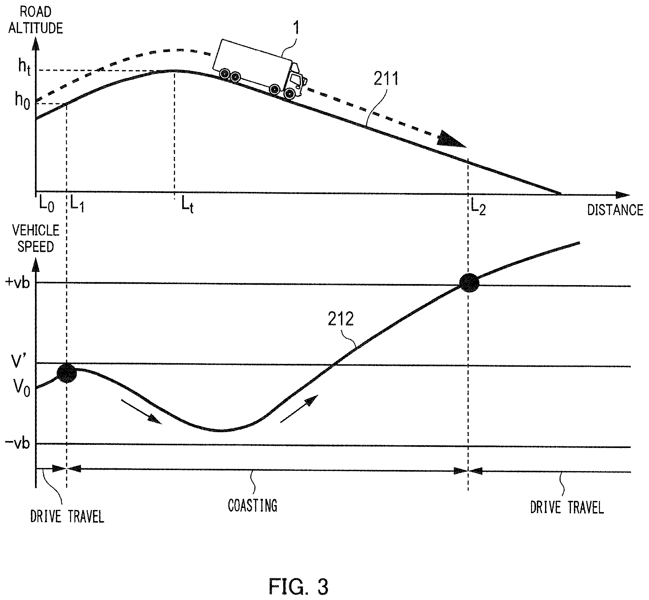

FIG. 3 illustrates examples of the road grade information and the travel schedule.

For example, the road grade information includes information representing the road altitude corresponding to the horizontal distance (road distance) from present position $L_0$ of vehicle 1 as upper solid line 211 indicates in of FIG. 3. It is to be noted that the horizontal distance from present position $L_0$ of vehicle 1 may be replaced by the elapsed time from the present time. In addition, the road altitude may be replaced by the road grade, from the relationship with the preceding and succeeding road altitude. The road grade information of solid line 211 indicates that present position $L_0$ of vehicle 1 is in the middle of an upslope and that there is a downslope immediately after the upslope.

For example, automatic travel control section 110 sequentially determines whether a part (hill crest) where the road changes from an upslope to a downslope is present within a predetermined distance range of the road ahead on the basis of the road grade information.

Then, when there is a hill crest, automatic travel control section 110 determines whether the vehicle can travel through the hill crest by coasting in the case where switching to coasting is performed at position $L_1$ immediately after present position La. That is, automatic travel control section 110 calculates whether the vehicle speed at the hill crest is acceptable minimum vehicle speed $V_{min}'$ or greater. Automatic travel control section 110 performs the above-mentioned calculation based on current vehicle speed $v_0$, the travel resistance coefficient of vehicle 1 determined in advance by the experiment and the like, and the road grade information.

When switching to coasting is performed at an upslope, the vehicle speed is gradually reduced. In some situation, however, the speed is high, or the distance to the crest is short enough to maintain the vehicle speed at minimum vehicle speed $V_{min}'(V'-va)$ or greater at a position near a downslope. In this case, even when switching to coasting is performed at an upslope, the above-mentioned travel condition that the minimum vehicle speed of coasting is $V_{min}'$ or greater can be satisfied.

When automatic travel control section 110 determines that the vehicle can pass through the hill crest by coasting, automatic travel control section 110 determines that switching to coasting is performed at next point $L_1$, and that the coasting is maintained until the vehicle reaches point $L_2$ where the vehicle speed falls outside the range of $V_{min}'$ to $V_{max}'$ (V'-va to V'+vb), for example. Then, as lower solid line 212 indicates in FIG. 3, automatic travel control section 110 generates a travel schedule in which switching to coasting is performed at point $L_1$ and the coasting is maintained until the vehicle reaches point $L_2$.

To be more specific, by use of Expression (1), automatic travel control section 110 calculates estimation value vt of the vehicle speed at crest position $L_t$ in the case where vehicle 1 performs coasting up to crest position $L_t$ (hereinafter referred to as "estimation crest vehicle speed"), for example.
[Expression 1]

$$v_t = \sqrt{\frac{2}{M}\left\{\frac{1}{2}Mv_0{}^2 + Mgh_0 - \left(Mgh_t + \lambda \cdot v_0^2 \cdot g \cdot \frac{\Delta x}{\cos\theta_0} + \mu \cdot Mg \cdot \Delta x\right)\right\}} \quad \ldots(1)$$

Here, M represents the present vehicle weight of vehicle 1, g the gravitational acceleration, $h_0$ the altitude of present position $L_0$ of vehicle 1, $h_t$ the altitude of crest position $L_t$, $\mu$ the roll resistance coefficient of vehicle 1, and $\Delta x$ the distance (road distance) from present position $L_0$ to crest position $L_t$ in the horizontal direction.

Then, when the calculated estimation crest vehicle speed vt is equal to or greater than the set acceptable minimum vehicle speed $V_{min}$', automatic travel control section 110 determines that the coasting is maintained, whereas drive travel is switched to coasting. That is, automatic travel control section 110 generates a travel schedule indicated by solid line 212 in FIG. 3 for example, and controls vehicle 1 in accordance with the schedule.

Such a travel schedule including a coasting section determined based on the road grade information effectively improves the fuel economy of vehicle 1. In addition, with the control of vehicle 1 to travel in accordance with the travel schedule, the driver's successive accelerator operation is unnecessary. In the following description, the automatic travel in accordance with a travel schedule including drive travel and coasting which is generated based on the road grade information is referred to as "eco-map cruise travel."

In the eco-map cruise travel, when coasting is started and the vehicle speed is gradually reduced at the time when the driver tries to pass another vehicle without changing the vehicle speed of the automatic travel, the driver may feel unnatural as described above.

Accordingly, as described above, when a passing operation is detected by passing detection section 120, coasting prohibition processing section 130 prohibits automatic travel control section 110 from starting coasting. With this configuration, travel control device 100 can prevent the unnatural feeling of the driver who performs passing.

It is to be noted that automatic travel control section 110 may not generate a travel schedule. Automatic travel control section 110 may acquire a travel schedule generated, for a relatively long road, by the user or an external device such as a server on the Internet through an operation interface and/or a radio communication circuit.

(Predetermined operation and predetermined completion condition)

The predetermined operation representing a start of a passing operation is an operation of indicating a turn signal in a predetermined direction (for example, the right direction), for example. In this case, on the basis of an output signal from turn-signal switch 34, passing detection section 120 determines whether the operation of indicating a turn signal in a predetermined direction has been performed.

It is to be noted that the predetermined operation may be other operations representing a determination of a start of a passing operation by the driver.

For example, the predetermined operation may be an operation of putting off a turn signal indicated in a predetermined direction, an operation of steering the steering wheel at a predetermined angle (for example, 10 degrees clockwise), or an operation of turning back the steering wheel steered at a predetermined angle. In addition, in the case where automatic travel control section 110 also controls the steering angle of vehicle 1, the predetermined operation may be a user operation of requesting automatic travel control section 110 for starting an passing operation. Such an operation may be a sound operation, a gesture operation, a button operation, or a touch panel operation, for example.

It is to be noted that coasting prohibition processing section 130 may prohibit the start of coasting after a predetermined time has elapsed after the above-mentioned predetermined operation has been performed (that is, after passing start information is output). The reason for this is that it takes several seconds until the vehicle is brought close to another vehicle, and that, during that period of time, the unnatural feeling of the driver is weak even when coasting is started and the speed is reduced.

In addition, the predetermined completion condition corresponding to completion of a passing operation is that an operation of indicating a turn signal in a predetermined direction (for example, the left direction) has been performed, for example. In this case, on the basis of an output signal from turn-signal switch 34, passing detection section 120 determines whether the operation of indicating a turn signal in a predetermined direction has been performed.

In addition, the predetermined completion condition may be an operation of putting off a turn signal indicated in a predetermined direction, an operation of steering the steering wheel at a predetermined angle (for example, 10 degrees counterclockwise), or an operation of turning back the steering wheel steered at a predetermined angle performed. In addition, in the case where automatic travel control section 110 also controls the steering angle of vehicle 1, the predetermined operation may be a user operation of requesting automatic travel control section 110 for completion of a passing operation.

Further, the predetermined completion condition may be a condition that an elapsed time from the start of a passing operation has reached a predetermined threshold. The predetermined threshold may be an average value of the time required for a passing operation, for example.

With the above-mentioned predetermined operation and predetermined completion condition, passing detection section 120 can detect the start and the completion of a passing operation with high accuracy.

(Operation of device)

Next, an operation of travel control device 100 is described.

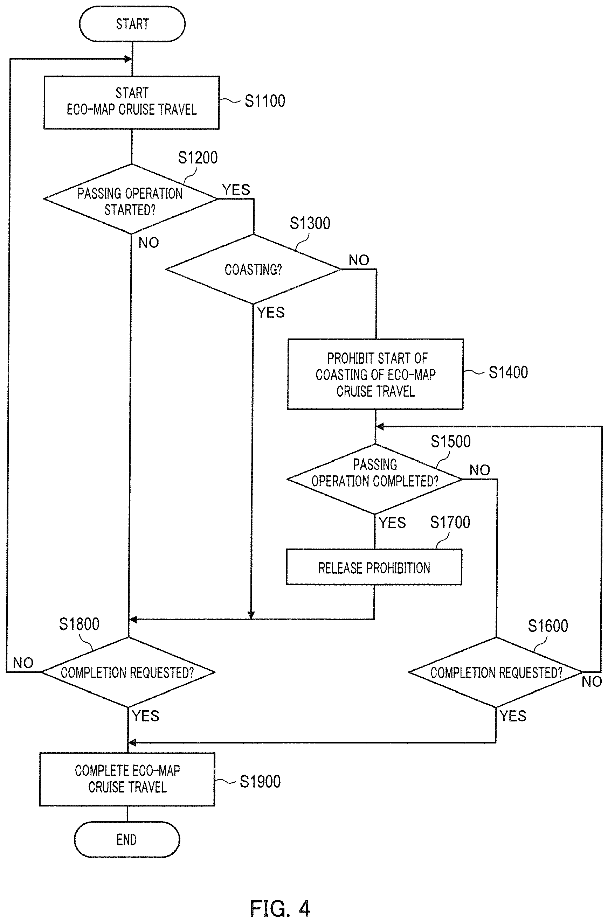

FIG. 4 is a flowchart of an example operation of travel control device 100.

At step 51100, automatic travel control section 110 starts eco-map cruise travel.

It is to be noted that, as described above, automatic travel control section 110 sequentially generates a travel schedule as a basis of eco-map cruise travel on the basis of the setting information, the road information, and the vehicle information, for example.

At step S1200, passing detection section 120 determines whether a passing operation is started. When a passing operation is started (S1200: YES), passing detection section 120 advances the process to step S1300. When a passing operation is not started (S1200: NO), passing detection section 120 advances the process to step S1800 described later.

At step S1300, coasting prohibition processing section 130 determines whether vehicle 1 is in a coasting state. When vehicle 1 is not in a coasting state (S1300: NO), coasting prohibition processing section 130 advances the process to step S1400. When vehicle 1 is in a coasting state (S1300: YES), coasting prohibition processing section 130 advances the process to step S1800 described later.

At step S1400, coasting prohibition processing section 130 prohibits automatic travel control section 110 from starting coasting of eco-map cruise travel. Specifically, the coasting of eco-map cruise travel is coasting included in a travel schedule.

At step S1500, passing detection section 120 determines whether the passing operation is completed. When the passing operation is not completed (S1500: NO), passing detection section 120 advances the process to step S1600. When the passing operation is completed (S1500: YES), passing detection section 120 advances the process to step S1700 described later.

At step S1600, automatic travel control section 110 determines whether completion of the eco-map cruise travel is requested by the driver's operation or the like. When completion of the eco-map cruise travel is not requested (S1600: NO), automatic travel control section 110 returns the process back to step S1500. When completion of the eco-map cruise travel is requested (S1600: YES), automatic travel control section 110 advances the process to step S1900 described later.

At step S1700, coasting prohibition processing section 130 releases the prohibition of the start of coasting of the eco-map cruise travel of automatic travel control section 110.

At step S1800, automatic travel control section 110 determines whether completion of the eco-map cruise travel is requested by the driver's operation or the like. When completion of the eco-map cruise travel is not requested (S1800: NO), automatic travel control section 110 returns the process back to step 51100. When completion of the eco-map cruise travel is requested (S1800: YES), automatic travel control section 110 advances the process to step S1900.

Then, at step S1900, automatic travel control section 110 completes the eco-map cruise travel.

Through the above-mentioned operation, travel control device 100 can prohibit the start of coasting during a passing operation while achieving eco-map cruise travel of vehicle 1.

(Effect of present embodiment)

As described above, travel control device 100 according to the present embodiment controls a vehicle to travel in accordance with a travel schedule including drive travel and coasting, and, when a passing operation is started, travel control device 100 detects that fact and prohibits a start of coasting on the condition that a passing operation is started.

With this configuration, travel control device 100 according to the present embodiment can improve the fuel economy of vehicle 1 and reduce the burden of the driver while suppressing unnatural feeling of the driver of vehicle 1.

In addition, when a predetermined completion condition corresponding to completion of a passing operation is satisfied, travel control device 100 according to the present embodiment releases the prohibition of the start of coasting and further determines whether vehicle 1 is in a drive travel state, and then, control device 100 does not prohibit the coasting when vehicle 1 is not in a drive travel state.

With this configuration, travel control device 100 according to the present embodiment can reduce the unnatural feeling of the driver while actively performing coasting as much as possible.

(Modification of Embodiment)

It is to be noted that the content of the travel schedule, and the contents of the setting information, the road information, and the vehicle information used for automatic travel are not limited to the above-described examples. For example, the travel schedule may have a content, which does not require the road grade information, in which switching to drive travel is performed at a time point when the vehicle speed is reduced to V'-va, and switching to coasting is performed at a time point when the vehicle speed reaches V'+vb.

In addition, passing detection section 120 may detect, as a start of a passing operation, an event other than a predetermined operation performed by the driver. For example, in the case where automatic travel control section 110 also controls a start of a passing operation, passing detection section 120 may acquire a timing of starting a passing operation from automatic travel control section 110.

In addition, a part of the configuration of travel control device 100 may be physically separated from other parts of travel control device 100. In this case, each part needs to include a communication circuit for communication.

This application is entitled to and claims the benefit of Japanese Patent Application No. 2015-065565 dated March 27, 2015.

Industrial Applicability

The travel control device and the travel controlling method of the present invention are useful as a travel control device and a travel controlling method which can improve the fuel economy of a vehicle and reduce the burden of the driver while reducing the unnatural feeling of the driver.

Reference Signs List

    1 Vehicle
    2 Automatic traveling device
    3 Engine
    4 Clutch
    5 Transmission
    6 Propeller shaft
    7 Differential gear
    8 Drive shaft
    9 Wheel
    10 Engine ECU
    11 Power transferring ECU
    13 Target-vehicle speed setting device
    14 Increment/reduction value setting device
    20 Road information acquiring device
    21 Present position acquiring device
    22 Weather condition acquiring device
    23 Periphery sensor
    30 Vehicle information acquiring device
    31 Accelerator sensor
    32 Brake switch
    33 Shift lever
    34 Turn-signal switch
    35 Vehicle speed sensor
    40 Braking device
    41 Foot brake
    42 Retarder
    43 Auxiliary brake
    100 Travel control device
    110 Automatic travel control section
    120 Passing detection section
    130 Coasting prohibition processing section
    21 Present position acquiring device
    22 Weather condition acquiring device
    23 Periphery sensor
    30 Vehicle information acquiring device

31 Accelerator sensor
32 Brake switch
33 Shift lever
34 Turn-signal switch
35 Vehicle speed sensor
40 Braking device
41 Foot brake
42 Retarder
43 Auxiliary brake
100 Travel control device
110 Automatic travel control section
120 Passing detection section
130 Coasting prohibition processing section

**Claims**

1. A travel control device (100) comprising:

   an automatic travel control section (110) that controls a vehicle to travel in accordance with a travel schedule including drive travel and coasting;
   a passing detection section (120) that detects a start of a passing operation in which the vehicle passes another vehicle; and
   a coasting prohibition processing section (130) that prohibits the automatic travel control section (110) from starting the coasting on a condition that the passing operation is started, wherein
   the coasting prohibition processing section (130) causes the automatic travel control section (110) to continue the coasting when the passing operation is started while the vehicle is coasting.

2. The travel control device according to claim 1, wherein the coasting prohibition processing section (130) releases prohibition of a start of the coasting of the automatic travel control section (110) when a predetermined completion condition corresponding to completion of the passing operation is satisfied.

3. The travel control device according to claim 1 or 2, wherein:

   the coasting prohibition processing section (130) determines whether the vehicle is in a drive travel state or in a coasting state;
   when the vehicle is in the drive travel state, the coasting prohibition processing section (130) prohibits the start of the coasting; and
   when the vehicle is in the coasting state, the coasting prohibition processing section (130) does not prohibit the coasting.

4. The travel control device according to one of claims 1 to 3, wherein when a predetermined operation is performed by a driver of the vehicle, the passing detection section (120) detects, as a start of the passing operation, a fact that the predetermined operation is performed.

5. The travel control device according to claim 4, wherein the predetermined operation includes at least one of an operation of indicating a turn signal in a predetermined direction, an operation of putting off the turn signal indicated in the predetermined direction, an operation of steering a steering wheel at a predetermined angle, an operation of turning back the steering wheel steered at the predetermined angle, and an operation of requesting the automatic travel control section (110) for starting the passing operation.

6. A travel controlling method comprising:

   controlling (S1100) a vehicle to travel in accordance with a travel schedule including drive travel and coasting;
   detecting (S1200) a start of a passing operation in which the vehicle passes another vehicle; and
   prohibiting (S1400) a start of the coasting on a condition that the passing operation is started,
   wherein the controlling (S1100) continues the coasting when the passing operation is started while the vehicle is coasting.

**7.** The travel control device according to one of claims 1 to 5, wherein:
the coasting prohibition processing section (130) prohibits the automatic travel control section (110) from starting the coasting after a pre-determined time has elapsed since the start of the passing operation.

**Patentansprüche**

**1.** Fahrtsteuervorrichtung (100) umfassend:

einen automatischen Fahrtsteuerabschnitt (110), der ein Fahrzeug gemäß einem Fahrtplan steuert, der eine Fahrbewegung und ein Ausrollen beinhaltet;
einen Überholerfassungsabschnitt (120), der den Beginn eines Überholvorgangs erfasst, bei dem das Fahrzeug ein anderes Fahrzeug überholt; und
einen Ausrollverhinderungs-Verarbeitungsabschnitt (130), der dem automatischen Fahrtsteuerabschnitt (110) den Beginn des Ausrollens unter der Bedingung verbietet, dass der Überholvorgang gestartet wird, wobei der Ausrollverhinderungs-Verarbeitungsabschnitt (130) den automatischen Fahrsteuerabschnitt (110) veranlasst, den Überholvorgang fortzusetzen, wenn der Überholvorgang begonnen wird, während das Fahrzeug im Ausrollen ist.

**2.** Fahrtsteuervorrichtung nach Anspruch 1, wobei der Ausrollverhinderungs-Verarbeitungsabschnitt (130) die Verhinderung eines Beginns des Ausrollens des automatischen Fahrtsteuerabschnitts (110) aufhebt, wenn eine vorbestimmte Beendigungsbedingung, die der Beendigung des Überholvorgangs entspricht, erfüllt ist.

**3.** Fahrtsteuervorrichtung nach Anspruch 1 oder 2, wobei:

der Ausrollverhinderungs-Verarbeitungsabschnitt (130) bestimmt, ob sich das Fahrzeug in einem Antriebsfahrzustand oder in einem Ausrollzustand befindet;
wenn sich das Fahrzeug im Antriebsfahrzustand befindet, der Ausrollverhinderungs-Verarbeitungsabschnitt (130) den Beginn des Ausrollens verhindert; und
wenn sich das Fahrzeug im Ausrollzustand befindet, der Ausrollverhinderungs-Verarbeitungsabschnitt (130) den Beginn des Ausrollens nicht verhindert.

**4.** Fahrtsteuervorrichtung nach einem der Ansprüche 1 bis 3, wobei, wenn ein vorbestimmter Betrieb durch einen Fahrer des Fahrzeugs durchgeführt wird, der Überholerfassungsabschnitt (120) als Beginn des Überholvorgangs eine Tatsache erfasst, dass der vorbestimmte Betrieb durchgeführt wird.

**5.** Fahrtsteuervorrichtung nach Anspruch 4, wobei der vorbestimmte Vorgang mindestens einen Vorgang des Anzeigens eines Blinksignals in einer vorbestimmten Richtung, einen Vorgang des Abstellens des in der vorbestimmten Richtung angezeigten Blinksignals, einen Vorgang des Lenkens eines Lenkrads in einem vorbestimmten Winkel, einen Vorgang des Zurückdrehens des in dem vorbestimmten Winkel gelenkten Lenkrads und einen Vorgang des Anforderns des automatischen Fahrtsteuerabschnitts (110) zum Beginnen des Überholvorgangs beinhaltet.

**6.** Fahrtsteuerverfahren, umfassend:

Steuern (S1100) eines Fahrzeugs zum Fahren gemäß einem Fahrtplan, der eine Fahrbewegung und ein Ausrollen beinhaltet;
Erfassen (S1200) des Beginns eines Überholvorgangs, bei dem das Fahrzeug ein anderes Fahrzeug überholt; und
Verhindern (S1400) eines Beginns des Ausrollens unter einer Bedingung, dass der Überholvorgang begonnen wird,
wobei das Steuern (S1100) das Ausrollen fortsetzt, wenn der Überholvorgang begonnen wird, während das Fahrzeug ausrollt.

**7.** Fahrtsteuervorrichtung nach einem der Ansprüche 1 bis 5, wobei:
der Ausrollverhinderungs-Verarbeitungsabschnitt (130) den automatischen Fahrtsteuerabschnitt (110) daran hindert, das Ausrollen zu beginnen, nachdem eine vorbestimmte Zeit seit dem Beginn des Überholvorgangs verstrichen ist.

**Revendications**

1. Dispositif de commande de déplacement (100) comprenant :

   une unité de commande de déplacement automatique (110) qui conduit un véhicule à se déplacer selon un programme de déplacement comprenant un déplacement par entraînement et en roue libre ;
   une unité de détection de dépassement (120) qui détecte un début d'opération de dépassement dans laquelle le véhicule dépasse un autre véhicule ; et
   une unité de traitement d'interdiction de marche en roue libre (130) qui délivre à l'unité de commande de déplacement automatique (110) une interdiction de début de marche en roue libre à condition que l'opération de dépassement soit lancée, dans laquelle
   l'unité de traitement d'interdiction de marche en roue libre (130) amène l'unité de commande de déplacement automatique (110) à poursuivre la marche en roue libre lorsque l'opération de dépassement est lancée alors que le véhicule est en roue libre.

2. Dispositif de commande de déplacement selon la revendication 1, dans lequel l'unité de traitement d'interdiction de marche en roue libre (130) lève l'interdiction de début de marche en roue libre de l'unité de commande de déplacement automatique (110) lorsqu'une condition de réalisation prédéterminée correspondant à la réalisation de l'opération de dépassement est satisfaite.

3. Dispositif de commande de déplacement selon la revendication 1 ou 2, dans lequel :

   l'unité de traitement d'interdiction de marche en roue libre (130) détermine si le véhicule est en état de déplacement par entraînement ou en roue libre ;
   lorsque le véhicule est en état de déplacement par entraînement, l'unité de traitement d'interdiction de marche en roue libre (130) interdit le début de marche en roue libre ; et
   lorsque le véhicule est en état de roue libre, l'unité de traitement d'interdiction de marche en roue libre (130) n'interdit pas la marche en roue libre.

4. Dispositif de commande de déplacement selon l'une des revendications 1 à 3, dans lequel, lorsqu'une opération prédéterminée est réalisée par un conducteur du véhicule, l'unité de détection de dépassement (120) détecte la réalisation de l'opération prédéterminée en tant que début d'opération de dépassement.

5. Dispositif de commande de déplacement selon la revendication 4, dans lequel l'opération prédéterminée comprend au moins une opération dont une opération consistant à actionner un clignotant dans une direction prédéterminée, une opération consistant à désactiver le clignotant indiqué dans une direction prédéterminée, une opération consistant à orienter le volant dans un angle prédéterminé, une opération consistant à ramener le volant orienté à l'angle prédéterminé, et une opération consistant à inviter l'unité de commande de déplacement automatique (110) à démarrer l'opération de dépassement.

6. Procédé de commande de déplacement comprenant :

   commander (S1100) un véhicule pour qu'il se déplace selon un programme de déplacement comprenant un déplacement par entraînement et en roue libre ;
   détecter (S1200) un début d'opération de dépassement dans laquelle le véhicule dépasse un autre véhicule ; et
   interdire (S1400) un début de marche en roue libre à condition que l'opération de dépassement soit lancée, dans laquelle la commande (S1100) poursuit la marche en roue libre lorsque l'opération de dépassement est lancée alors que le véhicule est en roue libre.

7. Dispositif de commande de déplacement selon l'une des revendications 1 à 5, dans lequel :
   l'unité de traitement d'interdiction de marche en roue libre (130) délivre à l'unité de commande de déplacement automatique (110) une interdiction de début de marche en roue libre après qu'un temps prédéterminé s'est écoulé depuis le début de l'opération de dépassement.

FIG. 1

100

TRAVEL CONTROL DEVICE

110 —  AUTOMATIC TRAVEL
        CONTROL SECTION

120 —  PASSING DETECTION
        SECTION

130 —  COASTING PROHIBITION
        PROCESSING SECTION

FIG. 2

FIG. 3

EP 3 275 756 B1

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012131273 A
- DE 102013010148 A1
- DE 102013225431 A1
- JP 2015065565 A